# EUROPEAN PATENT APPLICATION

(11) **EP 4 610 432 A1**
(43) Date of publication of application: **03.09.2025**
(21) Application number: 22835858.6
(22) Date of filing: 11.11.2022
(51) Int. Cl.: E02B 3/12, B29C 65/20, B29C 65/00

(54) **DEPLOYMENT MACHINE, WELDING MACHINE, EQUIPMENT AND METHOD FOR THE AUTOMATED INSTALLATION OF GEOMEMBRANES**

(71) Applicant: Atarfil, S.L., 18230 Atarfe Granada (ES)
(72) Inventor: CARRERAS TORRES, Emilio, 18230 Atarfe (Granada) (ES); MARTIN SEVILLA, Gabriel, 18230 Atarfe (Granada) (ES); REYES MOLINA, Diego, 18230 Atarfe (Granada) (ES); PELAYO VALLE, Francisco José, 18230 Atarfe (Granada) (ES); AGIS MELERO, Rodrigo Carlos, 18230 Atarfe (Granada) (ES); MORILLAS GUTIÉRREZ, Christian Agustín, 18230 Atarfe (Granada) (ES)
(74) Representative: Carlos Hernando, Borja
(86) International application number: PCT/ES2022/070727
(87) International publication number: WO 2024/100309

(57) **Abstract**

The deployment machine, welding machine, equipment and method for the automated installation of geomembranes relate to a deployment machine and a welding machine which, in combination, form equipment for the automated installation of geomembranes or membranes. Specifically, the equipment comprises an automatic deployment machine (1) for the deployment of geomembrane rolls (2); a welding machine (3) for welding the deployed geomembranes (2 and 2') which is electronically connected and has self-guiding capability to automatically correct its path and ensure a preset overlapping of the membrane or geomembranes (2) by working in synchronization with the displacement of the deployment machine (1); and a computer control and planning unit. The method comprises: a step for parameterization and mapping of the terrain using 3D topography; a step for planning the deployment and welding using a specific computer system; and a step for deployment and welding comprising simultaneous and automated deployment and welding using a deployment machine (1) and a welding machine (3) synchronized with one another, with a geolocation positioning system and a process monitoring system.

## Description

### OBJECT OF THE INVENTION

The invention, that is, the deployment machine, welding machine, equipment and method for the automated installation of geomembranes, relates to a deployment machine and a welding machine that can form equipment for automating the conventional, and currently manual, process for the installation of geomembranes for the waterproofing of reservoirs and artificial lakes, or of ponds for industrial, mining and agricultural waste, or for the construction and sealing of urban waste landfills. Said equipment comprises, forming an integral assembly operating in synchronization, a deployment machine, in the form of a platform with automatic guidance capability, for the deployment of geomembrane rolls, a welding machine, also with automatic guidance, which works in synchronization with the deployment machine and guarantees welding quality with minimal operator intervention, and a computer control unit with geolocation for planning and support for execution of the installation, all of which allows the process to be automated and a quality of the installations less dependent on the human factor to be achieved. The long-term performance of the installations and, consequently, their environmental guarantees and impact are thus improved, and current execution speeds are also exceeded in order to reduce installation costs over large areas of land. The components of the aforementioned equipment, i.e., the deployment machine and the welding machine, may be used separately, with this also being an object of the present invention.

The invention also relates to a method for the automated installation of geomembranes with the above equipment and which, among others, comprises steps for obtaining the reference points of the pond or installation, mapping and geolocation of the points; as well as planning or obtaining an optimized layout of the deployment of the geomembranes in the installation, and remote monitoring of the entire installation process during its execution.

The field of application of the present invention is framed within the geomembrane installation sector, also covering the area of industry dedicated to the manufacture of equipment and machinery for the unrolling and welding of geomembranes and the like.

### BACKGROUND OF THE INVENTION

The installation of geomembranes is a common practice throughout the world for the waterproofing of irrigation ponds, artificial lagoons, lining and sealing of landfills, waterproofing of large surfaces, containment ponds for waste from the mining, agriculture and chemical industries, etc.

The most commonly used materials are HDPE (High Density Polyethylene), LDPE or LLDPE, but also others such as VLDPE and fPP. The installation process is laborious and costly, requires a large deployment of human resources that must travel to often hostile areas, for long periods of time, and the final result of the installation is currently highly dependent on the skill and experience of the human team that executes it, putting at risk not only the success of the installation, but also the performance of the installation in the medium-long term (decades to hundreds of years).

More specifically, the field installation of said geomembranes comprises: the deployment of rolls, as well as the subsequent watertight joining of the edges of adjacent geomembranes, usually by thermoplastic welding.

Currently, the deployment of rolls is planned and carried out manually, or with the aid of mechanical means available in the area. Once the geomembranes, or membranes, are deployed parallel to one another, they are temporarily fixed to the ground (usually by sandbags) before proceeding with the longitudinal welding of each of the membranes to the adjacent one.

The usual welding system is based on the use of semi-automatic hot wedge machines, which can currently perform at operating speeds of up to 12 m/min in the most advanced versions, although achievable welding speeds are, in practice, less than 10 m/min. For example, with 1.5 mm thick membranes, a welding speed of 7 m/min has been reported in field installations with a state-of-the-art machine. However, the achievable welding speed decreases with increasing membrane thickness (the most common thicknesses in large installations are between 1.5 mm and 3 mm).

Apart from the speed limitations, these semi-automatic machines (also called automatic machines by some manufacturers) require manual adjustment of the speed, wedge temperature and consolidation roll pressure parameters and constant intervention of the operators to start and stop, as well as to manually monitor and correct their orientation and avoid the formation of folds during the welding process.

In large installations (several hectares to square kilometers), even with several pieces of welding equipment, the times required to join the deployed rolls are very long. For example, one km² of installation with rolls 6 m wide represents more than 160 km of welding, counting only the linear joint in the deployment direction. A standard welding machine, with speeds between 4 and 6 meters per minute, would spend between two and three months to cover this distance assuming uninterrupted use 8 hours every day.

The welding method most commonly used in practice is the double seam welding method, with a central channel for testing by pressurized air after completion of the joining of two geomembrane panels. In case of failure, locating them is quite tedious (joints up to about 150 m), and it is helpful to have records of the basic welding parameters (wedge temperature, speed and pressure of the rollers) along the entire length of the joint. Modern machines, called "data acquisition hot wedge welding devices" allow monitoring and recording these parameters, along with GPS coordinates. Off-line records analysis allows the detection of anomalies in said parameters (e.g., isolated sudden changes in roller pressure) along with their approximate locations.

Welding quality standards establish minimum values in tests for the mechanical resistance to cutting and peeling on samples of the same (destructive tests), with several welding attempts and manual adjustment of the welding parameters by the installation personnel, until the required minimum thresholds are achieved.

Even if the quality tests performed during installation are passed, long-term failure studies reveal that most of the ruptures and leaks in the installations occur precisely in the joints between membranes, due to deficiencies or stress caused in the material during the welding process. On the other hand, studies on the long-term performance of welds have shown that certain parameters of the welding process are critical, so that it is not enough to exceed the test thresholds set by the standards, but rather said parameters must be chosen and adjusted within certain ranges in order to ensure a long-term quality joint.

The process is highly dependent on local conditions of temperature, humidity, wind, solar radiation, etc. In large installations, linear expansions in the deployed rolls may vary by several meters from one time period to another depending on climatic conditions.

Having an automated system which, based on external sensory information, has an automatically applied tabulated parameterization represents an enormous advantage for improving the reproducibility of the process and ensuring quality in any situation where the installation is carried out.

The automation of the entire geomembrane field installation process requires systems for planning the deployment of the geomembrane rolls, and the automated execution of the deployment and welding, reducing the execution times of said installations and guaranteeing their long-term quality.

The objective of the present invention is, therefore, the development of a piece of equipment and method for the automated installation of geomembranes to meet this need.

### DESCRIPTION OF THE INVENTION

The equipment and method for the automated installation of geomembranes relate to a piece of equipment that operates in whole or in part on its own, and a method which allows automation of the installation of geomembranes over large areas of land, primarily for the construction of reservoirs, artificial lakes, or ponds of any kind that require a sealed and waterproof bottom.

The first object of the invention relates to a deployment machine for the deployment of geomembrane or membrane rolls according to claim 1. Optional features of the deployment machine are set out in claims 2 to 6.

Thus, the autonomous deployment machine for the deployment of geomembrane or membrane rolls comprises at least:
- One mobile platform with a body and self-guiding means,
- One support and unwinding system for a geomembrane or membrane roll installed on the platform,
- One autonomous electrical power generation system installed in the body of the mobile platform, which produces electrical power for the displacement and operation of systems and modules of said deployment machine, and

One communication module.

Preferably, the platform incorporates a traction and steering motorization on each axle of its four wheels, with an active hydraulic suspension system for a stable displacement of the platform in the presence of uneven terrain and slope changes. Each of said wheels is preferably arranged at the end of an arm that can be deployed from the platform, the arms being able to be rotated and anchored at 90° in order to be positioned perpendicular to the platform in a deployed position.

The platform preferably has on its side a vision system for detecting the edge of a previously deployed membrane or geomembrane and directing the path of the deployment machine, aligning a membrane or geomembrane being deployed with the previously deployed membrane, with a preset overlapping between the two.

Preferably, the support and unwinding system for a geomembrane or membrane roll comprises an edge detection sensor for detecting the edge of the membrane being deployed which, together with the vision system, corrects the path of the machine so that the overlapping of the membranes is not affected by "telescopic" deformations or lateral displacements of the rolling. Said support and unwinding system for the roll is preferably arranged on a turntable that preferably uses a motorized ring or bearing, which is in turn arranged on the platform.

To control the unwinding of the membrane, the support and unwinding system preferably has a system of motorized rollers which regulate the rotation speed of the roll during the deployment depending on the speed of the welding machine, modulating the same with the measurement of the tension of the membrane being deployed. Thus, the support and unwinding system can have extensible ends so as to adjust them to different geomembrane or membrane roll widths.

The machine may comprise a series of interconnected electronic controllers, installed in the body of the platform, which, together with the communication module, govern the operation of the machine. These are coordinated to implement the various degrees of movement autonomy in the machine, namely, a fully autonomous degree during the deployment of a membrane, a semi-autonomous degree in repositioning the machine for the next start of deployment of a membrane; and a manual degree directed by the operator in maneuvering and transporting the machine.

Also, the communication module of the deployment machine may comprise a positioning system, preferably an RTK(Real Time Kinematic)system, based on GPS and local beaconing for navigation and remote tracking by means of an external computer unit for planning and monitoring the progress of the installation, recording the status of the deployment of the membrane or geomembrane along its entire path.

The deployment machine can also have additional protection systems, such as manual emergency shutdowns, using LIDAR sensors and 3D obstacle detection cameras.

Likewise, a second object of the invention relates to a welding machine for welding geomembranes or membranes according to claim 7, with claims 8 to 12 setting out other features of the welding machine.

The welding machine for welding geomembranes or membranes, object of the invention, comprises:
- A mobile platform with self-guiding means and with wheels,
- A welding head or unit using a hot wedge for welding two membranes or geomembranes, a first previously deployed membrane and a second membrane,
- Motorized consolidation rollers to consolidate the weld between the two membranes or geomembranes,
- Independent traction and steering motors for each wheel, and
- A control module with at least controllers for heating the wedge and controllers for the traction and steering motors, and
- A communications module to communicate with components or systems outside the welding machine.

This welding machine may have at least one sensor for measuring the temperature of the membranes or geomembranes to be welded, at least one sensor for measuring the pressure of the consolidation rollers and at least one sensor for measuring the welding speed, as well as at least one electronic controller for dynamically adapting the welding temperature and the welding speed based on preset value ranges depending on at least the welding temperature, the welding pressure and the thickness of the membranes or geomembranes to be welded. It may also have a cleaning system for cleaning the membranes or geomembranes at the weld band, mainly of the previously deployed membrane or geomembrane.

Said welding head or unit preferably incorporates edge sensors for detecting the edge of the membranes or geomembranes to direct the movement of the machine and to achieve a preset overlapping between the two membranes or geomembranes, namely an overlapping of the second membrane on the first deployed membrane or geomembrane.

Also, to facilitate removal of the wedge, the head can have a mechanism for the automated removal of the wedge for those cases in which the welding is not being performed according to preset welding parameters, or a blockage is detected in the forward movement of the machine or the power supply fails. This mechanism prevents damage due to overheating of the membranes.

The control module of the welding machine preferably has a positioning system, preferably an RTK(Real Time Kinematic) system, included in the control module for recording and sending data about the welding process.

Equipment, also an object of the present invention, comprises, according to claim 13, a deployment machine for the deployment of geomembrane rolls according to the present invention, according to claims 1 to 6, and a welding machine that can work in synchronization with the deployment machine and perform the welding with minimal operator intervention, further incorporating a computer control system with geolocation for planning and support for execution of the installation.

Preferably, said welding machine is a machine according to the welding machine described above according to claims 7 to 12, although other welding machines adapted for this purpose could be used.

Both the deployment machine and the welding machine have automatic guidance, or self-guiding, capability using self-guiding means such as specific sensors and controllers, so that the deployment and welding process can be performed with both machines operating autonomously. Preferably, the deployment machine for the deployment of the rolls, which has an autonomous electrical power generation system, powers the welding machine.

In particular, and in accordance with the foregoing, equipment for the automated installation of geomembranes preferably comprises:
- A machine for the automatic deployment of geomembrane rolls, comprising a driving machine, or mobile platform, with self-guiding means (AGV: Automatic Guided Vehicle) comprising a support and unwinding system for a geomembrane or membrane roll, suitable for the deployment of rolls preferably of standard size, i.e. usual widths of between about 6 and 7.5 meters, and a membrane length of about 150 meters, and preferably adaptable to different sizes, not being limited to the above dimensions.
   The machine is self-propelled and comprises an autonomous electrical power generation system, preferably an electrical power generator, included in the mobile platform, which allows for practically uninterrupted operation of the machine, as well as an independent traction and steering system that provides it with almost omnidirectional maneuverability. In addition, it preferably incorporates a vision system, with vision and membrane edge sensors, and a computerized control system which, in combination, control the movement thereof to achieve an overlapping of the deployed membranes with high precision, preferably at least a centimeter precision. It is also capable of handling deployments of rolls on slopes with angles having an inclination of more than 20°. In addition, preferably, as a result of a retraction system for retracting the arms of the mobile platform and of the support and unrolling structure assembled on it, the dimensions of this machine are adapted to allow its transport in cargo containers.
- A welding machine for welding geomembrane rolls, preferably of the hot wedge type, made up of a machine with self-guiding capability incorporated behind and electronically interconnected with the deployment machine, the working speed of which is adapted to be synchronized with said deployment machine or vice versa. Although the use of conventional welding machines (preferably machines with data acquisition) combined with a deployment machine for the deployment of the rolls as described above is not excluded, in order to optimize performance of the equipment consisting of the deployment machine and the welding machine, as well as for maximum process automation, the proposed welding machine reaches welding speeds higher than those known in the state of the art, preferably speeds of more than 10 m/min, and up to 20 m/min. For this purpose, they preferably incorporate a wedge having a substantial size (preferably more than 20 cm) and power (about 6000 watts). In addition, the welding machine preferably incorporates mechanisms for cleaning the surfaces to be welded, a mechanism for the automated removal of the wedge, drives for machine traction and steering in its forward movement, and means for correction (in coordination with the deployment machine) of the overlapping of the membranes to be welded, for example, a vision system, with vision and membrane edge sensors, thus requiring minimal operator intervention during the installation process.
- An external computer control unit which, supported by a positioning system for the installation of the geomembranes in the field based on geolocation and local beaconing, provides, in real time, detailed information on the progress of the installation, as well as the coordinates and orientation required for the deploying machine that define the initial positions thereof, in addition to supervising the synchronized operation with the welding machine. Detailed control during the deployment with welding is local (with measurements from the vision and membrane edge sensors incorporated in the deploying machine and also preferably in the welding machine). The positioning system also serves to detect possible discrepancies between the previously determined planning data of the installation and those of its practical execution, in order to introduce changes in the installation or to anticipate supply needs sufficiently in advance, as well as to monitor the installation process. For this purpose, said external computer unit comprises a computer system, with at least one computer program, which plans the installation prior to its execution and thereafter remotely monitors and supervises the field installation process. It comprises for this purpose at least a first planning-specific computer program or software based on multi-objective optimization algorithms, which calculates the required number of geomembrane rolls, as well as their optimal arrangement in deployment on a 3D topographic model of the actual installation, once the earthmoving and ground preparation prior to installation have been carried out. In addition, it also incorporates a second monitoring computer program or software, which may be integrated entirely or in part in the first computer program, which records online data about the installation process (deployment positions, welding parameters, etc.). A supervisor will perform data analysis to help manage the entire production and material supply process, as well as the final execution of the installation.

A final object of the invention relates to, according to claim 15, a method for the automated installation of geomembranes using the above equipment. This method for the automated installation of geomembranes object of the invention essentially comprises the following steps:
- A step for parameterization and mapping of the terrain comprising a 3D representation or survey of the installation area after preparation of the basin or installation terrain, based on the previous data,
- A step for planning the performance of the deployment and welding work, preferably by using a computer program specifically designed for this purpose, which comprises the estimation in number of rolls and the optimal distribution thereof on the installation terrain, in addition to the expected material supply, as well as the online adjustment of the positioning,
- A step for deployment of a first membrane or geomembrane,
- A step for deployment and welding of a second membrane or geomembrane on the first membrane or geomembrane using equipment for the automated installation of membranes or geomembranes, with control by said equipment for the automated installation of the positioning of the second membrane on the first membrane during the deployment of said second membrane, as well as control of the positioning by geolocation of the equipment during the deployment. This achieves precise deployment of the rolls and the performance of welding simultaneously and automated by the equipment, and
- Remote monitoring during the deployment and welding of membranes or geomembranes from data sent by the equipment to an external computer unit.

The steps for deployment and monitoring are preferably performed at the same time, so that they may further comprise:
- Geolocation of the equipment during the deployment of rolls by means of a positioning and navigation system, preferably RTK (Real Time Kinematic),
- Online recording and sending of data for remote monitoring of the installation process, using a computer program, and preferably in addition,
- Generation of data for future analysis and management of production using a computer program.

Prior to the step for parameterization and mapping, if the data about the terrain on which the membranes or geomembranes will be arranged is not available, it is necessary to carry out a step for obtaining geographic data and points of the installation, or pond, preferably by 3D aerial topography, based on photogrammetry, preferably using drones.

With all this, the equipment and method of the invention provide new innovative technological solutions, among which the following stand out:
- a self-propelled deployment machine for the deployment of geomembranes or membranes by means of an autonomous electrical power generation system, an electric generator, incorporated therein, and with self-guiding capability, as a result of means suitable for this purpose, for precise and controlled deployment of geomembranes in large field installations,
- the method improved in terms of speed and quality of welding geomembranes in the field,
- the welding machine for welding geomembranes with self-guiding capability, as a result of means suitable for this purpose,
- the automatic selection of the parameters that optimize the welding, due to the execution of a computer program designed for this purpose,
- a system for the correction of the overlapping of membranes in the welding machine in coordination with the deployment machine, without operator intervention, due to the control means installed in the deployment machine and/or in the welding machine, which act in synchronization, as well as being communicated with control means or units outside the deployment machine and welding machine,
- a precise method for the estimation of the deployment of geomembrane rolls, optimizing their distribution and adapting deployment to the actual layout of the installation, executed by a computer program, and
- a new system for remote monitoring during the installation of the geomembranes to verify the execution thereof as planned, including the connection of same with production and material distribution centers, also controlled by a computer program.

In short, the main objective of the invention is the automation of the deployment, followed by the welding of the geomembrane rolls, which is achieved by means of the described equipment, namely, as a result of the two machines operating in coordination with one another.

### DESCRIPTION OF THE DRAWINGS

To complement the description of the invention and in order to facilitate the understanding of its features, a set of figures of an illustrative and non-limiting nature is attached to this description as an integral portion thereof.
Figures 1-A and 1-B show a general view (Figure 1-A), and a schematic side elevation view (Figure 1-B) of an exemplary embodiment of the deployment machine for the deployment of geomembrane rolls comprised in the equipment of the invention, where the main parts and elements it comprises can be seen.
Figures 2-A and 2-B show two schematic top plan views of the mobile platform or AGV of the deployment machine shown in Figure 1-A, depicted with the arms of the platform in the transport position and in the working position, respectively.
Figure 3 shows a schematic side elevation view of the welding machine comprised in the equipment of the invention, where the main parts and elements it comprises can be seen.
Figures 4-A and 4-B show two schematic side elevation and top plan views, respectively, of the deployment and welding machine assembly comprised in the equipment of the invention, depicted in the working position, where the arrangement of each of them and of the membranes or geomembranes can be seen.

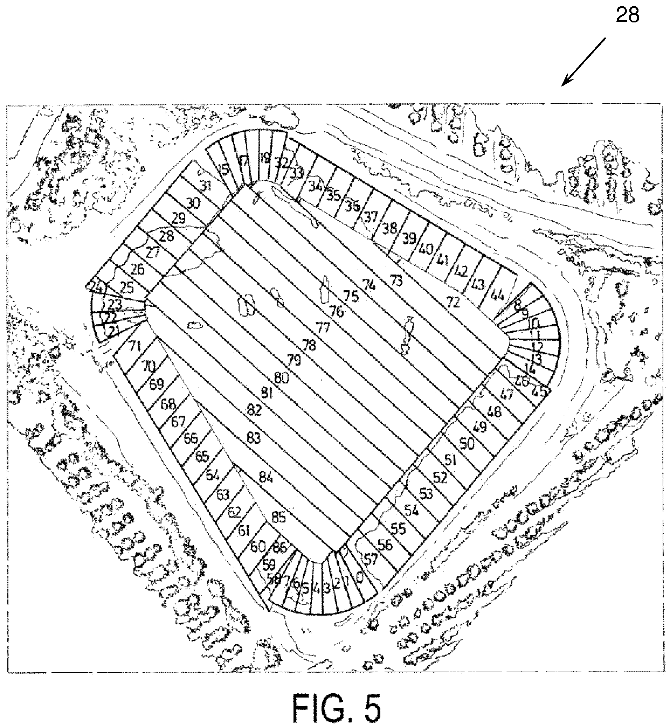

Figure 5 shows a depiction of an example of optimal planning of the deployment generated by the planning software of the installation, which is part of the computer application further comprising the positioning and navigation unit and unit for monitoring the equipment (not depicted), according to the invention.

And Figures 6-A and 6-B show a possible final implementation of the deployment machine, with approximate maximum dimensions, in a fully extended position when it is to be loaded with a roll (Figure 6-A), and in a fully retracted position, ready for transport (Figure 6-B).

### PREFERRED EMBODIMENT OF THE INVENTION

In view of the aforementioned figures, and in accordance with the adopted numbering, at least one example of the main parts of the equipment of the invention for the automated installation of geomembranes, comprising what is indicated and described in detail below, may be observed therein.

Thus, as can be seen in said figures, the invention essentially comprises: an automated deployment machine (1), operating in whole or in part on its own, for the deployment of geomembrane rolls (2); a welding machine (3) for welding the geomembranes (2) deployed by the deployment machine (1) which, located behind the deployment machine (1) and connected in a wired or wireless manner to same, works in synchronization with the displacement of said machine; equipment consisting of both machines (1, 3) together with a computer control and planning unit (not depicted, outside the machines) with computer software or program(s), that allows to previously perform an optimal planning of the deployment of the rolls (2), and computer software or program(s) distributed in the electronic controllers of both machines that governs in real time the operation of the deployment machine (1) and welding machine (3).

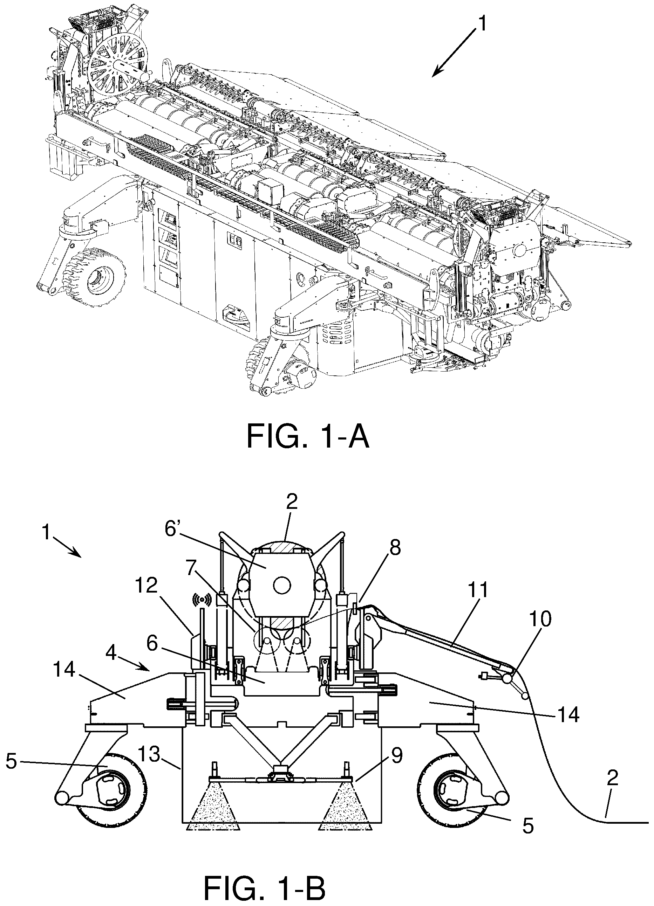

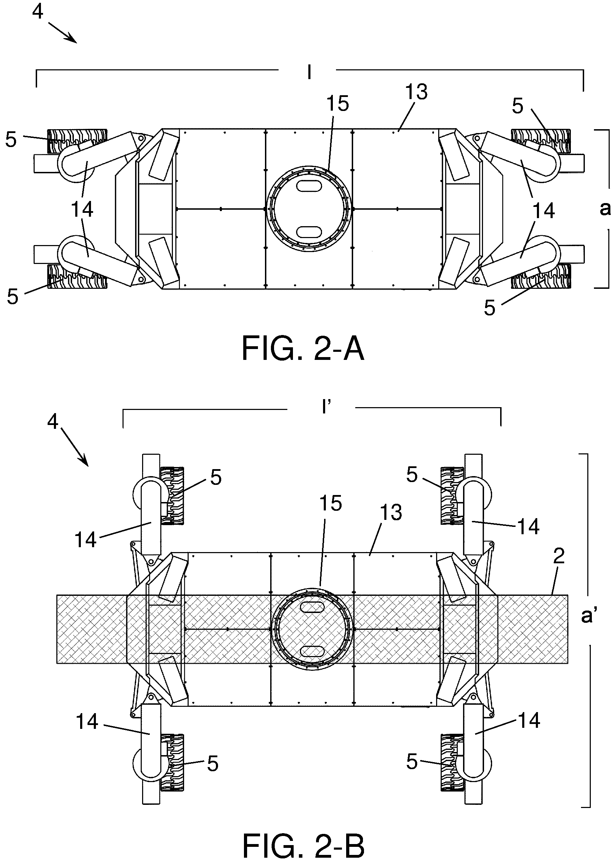

As shown in Figures 1-A, 1-B, 2-A and 2-B, the deployment machine (1) for the deployment of geomembrane rolls (2) is made up of a machine capable of handling and deploying rolls of different widths, preferably in turn comprising at least:
- One mobile platform (4), or AGV: Automatic Guided Vehicle, preferably having four wheels, on which the rest of the elements of the deployment machine are incorporated, said platform having a traction motorization and an independent steering motorization in all four wheels (5).
- One electrical power generating system, incorporated in the base or body of the AGV (13) preferably together with hydraulic and pneumatic generators, as well as the electronic controllers necessary for the operation of the machine.
- One support and unwinding system (6) for the roll (2, 2'), preferably arranged on a turntable (15) assembled on the platform (4), and comprising a support suitable for rolls of different lengths and widths, incorporating motorized rollers (7) with precise control of the unwinding speed; which speed, together with the forward movement speed of the AGV, are continuously adjusted to the speed of the welding machine.
- Preferably an edge detection sensor (8) for detecting the edge of a membrane or geomembrane (2) being deployed, or second membrane or geomembrane, from the deployment machine (1).
- Preferably a vision system (9) for the lateral surface over which the platform (4) is circulating, to detect the edge of the already deployed membrane, or first membrane (2'), and direct the path of the AGV so that the membrane being deployed, or second membrane (2), is aligned with the previously deployed membrane, or first membrane (2').
- Preferably a retractable guide tray (11), used so that the membrane or geomembrane (2, 2') overcomes, as it falls, the rear wheels (5) of the mobile platform (4) during the deployment of the same (2, 2').
- Preferably a tension gauge (10) to measure the tension of the membrane or geomembrane (2, 2') being deployed, used to modulate the unwinding speed of the roll.
- Preferably a system to control the movement of the turntable (15), so that the support and unwinding system (6) for the roll (2) it supports is automatically oriented with respect to the mobile platform (4) so that the central shaft of the roll (2) being deployed remains at all times perpendicular to the edge of the previously deployed geomembrane or membrane (2'), thus compensating for the path correction turns made by the platform (4).
- And at least one communications module (12) for communication with a geolocation and positioning system, and for remote communication with components outside the deployment machine (1), such as, for example, the welding machine (3) and the computer unit for supervising the installation.

In a preferred embodiment, the platform (4) of the deployment machine (1) is defined by an approximately rectangular base having traction and steering motorization on each axle of its four wheels (5), preferably four bogie-type pivoting wheels (5), and with an active hydraulic suspension system for a stable displacement of the platform (4) in the presence of uneven terrain and slope changes.

Preferably, said wheels (5) or bogies have electric motorization powered by a diesel generator, and other electrical power generation systems, such as batteries or even solar panels, can be contemplated, with the hydraulic part being kept only for the suspension system, to rotate the arms (14) of the bogies (5), and to regulate the position of the clamping system (6') for clamping the ends of the central shaft of the roll (2).

Preferably, the platform (4) comprises at its base a central block, which defines a housing (13) for the power supply system and other elements, and four arms (14) with the wheels (5) or bogies, said arms (14) preferably being deployable so that they can be rotated and anchored at 90° to position them perpendicular to the structure during the deployment, as can be seen in Figures 2-A and 2-B showing these two different positions.

It is thereby possible to make a width of the deployment machine (1) suitable for transport in containers, preferably "high cube" containers measuring 40 feet, with the arms retracted (Figure 2-A), compatible with a distance between wheels (5) in the deployment direction (deployed arms, Figure 2-B) suitable for handling slopes having an inclination of more than 20°.

For this purpose, in a non-limiting exemplary embodiment, the dimensions of said platform (4) are between 2 and 2.5 m wide (a) and between 7.5 and 8 m long (I) with the arms (14) in the retracted transport position (Figure 2-A); and about 5 m wide (a') and 5 m long (I') with the arms (14) in the deployed working position (Figure 2-B). Alternatively, the deployment machine (1) could have other dimensions.

The support (6) for the rolls (2) of the deployment machine (1) preferably incorporates an edge detection sensor (8) for detecting the edge of the geomembrane (2) being deployed, which complements the information of the vision system (9) that detects the edge of the previously deployed geomembrane (2'), correcting the path of the deployment machine (1) so that the overlapping is not affected by "telescopic" deformations or lateral displacements of the edge of the roll (2) occurring during its rolling in the factory or during its transport to the installation site.

Additionally, to achieve an optimal displacement, the path of the deployment machine (1) may be corrected based on the overlapping measurements that are detected by the welding machine (3), which moves behind the deployment machine (1), and which are transmitted between the communication modules (27) and (12) of the two machines.

The support and unwinding system (6) for the rolls preferably comprises a turntable (15) centrally supported on the base platform (4) or AGV, which uses a motorized slewing ring or slewing bearing similar to the axial bearings used in excavator machines.

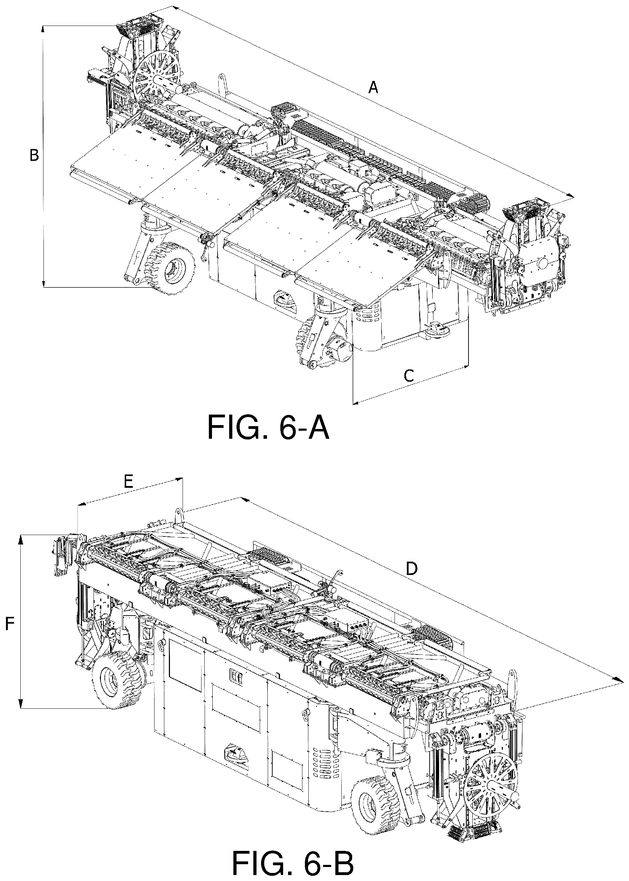

A support structure for the motorized unwinding rollers (7), which is preferably built with extensible, telescopic beams to adjust them to different roll widths, and forks (6') for holding and guiding the ends of the roll (2), is supported on said turntable. These forks (6') may be hinged to facilitate transport of the machine and preferably incorporate expandable shafts that engage the ends of the roll and retain, by means of a pneumatic brake, the central shaft of the roll so as to maintain the tightness of the roll while it is unwound, as has been done in the possible implementation of the deployment machine shown in Figures 1-A, 6-A and 6-B.

The deployment of the roll is regulated by precisely controlling the rotation speed of the motorized rollers (7) on which the roll (2) rests, which speed must be adjusted at all times depending on the speed of the welding machine (3), and modulated with the measurement of the tension sensor (10) detecting the tension of the membrane or geomembrane (2) being deployed. The purpose of this sensor (10) is to avoid tension variations that may occur at the welding point due, for example, to changes in slope during the deployment of the rolls.

On the other hand, the mobile platform or AGV (4) comprises, as indicated above, an electrical power generation system suitable for the power requirements of the equipment consisting of the deployment machine (1) and the welding machine (3). This generation system is powered by a diesel generator which, in addition to producing the energy necessary for the traction and steering motors of the wheels (5) of the machine, preferably in turn provides energy for the operation of the electronic and electrical equipment of the welding machine (3) to which it is connected for such purpose by wiring which transmits the electrical power.

Finally, to control the operation of the deployment machine (1), the latter preferably comprises a series of electronic controllers connected to the communications module (12), which allow different degrees or modes of movement autonomy in the deployment machine to be established, these degrees of autonomy being:
- A degree of fully autonomous movement during the deployment of the rolls,
- A degree of semi-autonomous movement, with human collaboration in part, for repositioning the machine (1) before the next start of deployment of a roll, and
- A degree of manual movement, directed and controlled by an operator, and necessary mainly in transport maneuvers.

Thus, for the welding-free deployment of the first membrane or geomembrane rolls (2'), the autonomous mode will be used, directed in this case by the positioning and navigation system, preferably RTK, provided in the module (12), and during the deployment and welding of the following rolls the control will be directed by local information, following the estimates of orientation, position and speed obtained from the sensors incorporated for this purpose in the deployment machine (1) and in the welding machine (3).

For this purpose, the deployment machine (1) comprises, in said module (12), a positioning system, based on GPS and local beaconing, which also allows precise remote tracking, by means of the computer unit equipped with a supervision application specifically developed for this purpose, of the progress of the installation, also recording the status of the deployment and of the welding process along its entire path.

In addition, the deployment machine (1) can incorporate additional protection systems such as manual emergency shutdowns and by using LIDAR sensors, a remote control for manual mode control, etc., which are not shown in the figures.

In the exemplary embodiment of the deployment machine (1) of Figures 6-A and 6-B, the dimensions of said machine are between 10 and 11 m long (A), between 3 and 3.5 m high (B) and between 3 and 4 m wide (C), in the working position (Figure 6-A); and between 9 and 10 m long (D), between 2 and 2.3 m wide (E) and between 2 and 2.5 m high (F), in the retracted position for transport (Figure 6-B). These dimensions could be modified.

In addition to the deployment machine (1) for the deployment of rolls, the invention relates to a welding machine (3) which preferably forms part of the equipment object of the invention. Said welding machine (3) is used in the equipment to weld together two membranes (2, 2') that partially overlap one another after the deployment or unrolling thereof by the deployment machine (1). Said welding machine (3) comprises thermal technology by means of a hot wedge (16), which has been improved with respect to the known technology by including welding control means (parameterizing the welding process) and increasing the welding speed with respect to current machines which are designed for manual use by an operator, by increasing the power and length of the wedge (on which the welding speed is linearly dependent). The welding speed can reach values up to preferably 20 m/min.

Thus, the welding machine (3) is a machine with self-guiding capability due to self-guiding means incorporated therein, capable of automatically correcting its path and ensuring at all times (in coordination with the deployment machine) the optimal overlapping of the membranes or geomembranes (2, 2'), a first membrane or geomembrane (2') deployed and a second membrane or geomembrane (2) being deployed. These tasks are currently carried out in installations by the operators, who must accompany the welding machine as it moves forward and correct any possible displacements manually. It also incorporates means for monitoring and dynamically adapting the welding parameters to maintain at all times the ranges of values of these parameters (temperature, speed, and pressure of the consolidation rolls) that are suitable for achieving a quality weld, not only at the time of installation, but also in its long-term performance.

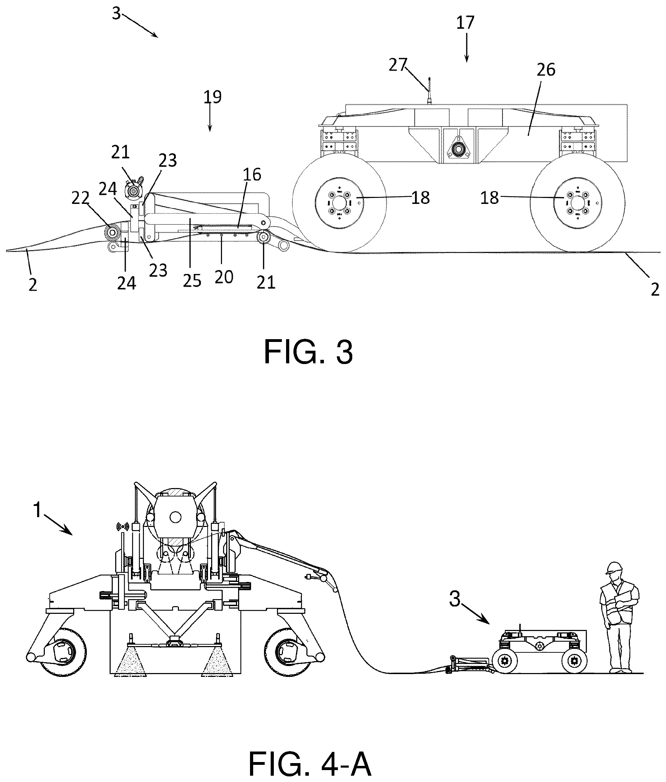

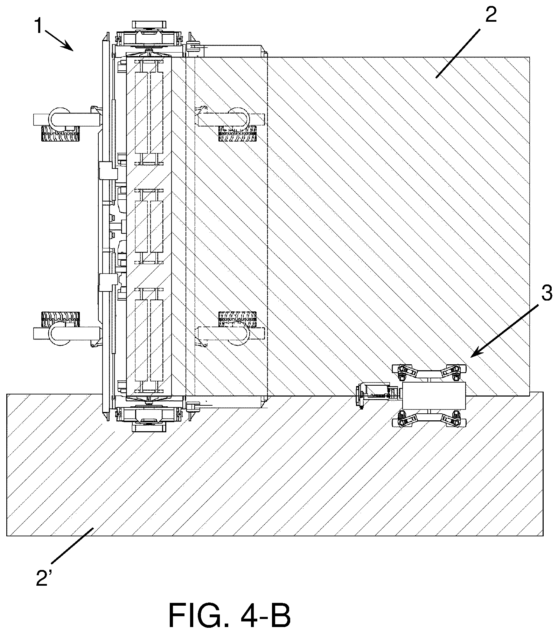

For this purpose, as can be observed in Figure 3, the welding machine (3) preferably incorporates technology based on a hot wedge (16) with electrical resistors, and it can operate with autonomous, self-guided movement, with the operator's intervention being reduced to simply fixing it in its starting position and connecting it to the deployment machine (1). Thereafter, the welding machine (3) moves forward autonomously, without requiring human participation, executing the welding joint of the membrane (2) being deployed, or second membrane, with the previously deployed membrane (2') or first membrane, as shown in Figures 4-A and 4-B. As mentioned, the welding speed is continuously adjusted to the speed required to obtain a quality weld, which speed is, in turn, the reference speed for the deployment machine (1), so that both machines (1, 3) move forward in a coordinated manner in the installation with the welding of the membranes (2, 2'), said speed being the maximum speed possible that is compatible with a precise control of the process.

The welding speed is proportional to the effective length of the wedge (16), which coincides with the length of the wedge if full contact of the membranes or geomembranes (2, 2') to be welded with the surface of the wedge is ensured along its entire path.

Manufacturers of manual machines, also called 'semi-automatic' or 'automatic' machines by some manufacturers, have progressively increased the lengths of wedges, although they are limited by the characteristics of the use of these machines. A larger sized wedge requires more electrical power to maintain its temperature, limiting its possibilities of use by operators (heavier and larger sized machines), as well as its versatility (use on vertical slopes or very steep slopes, adaptation to the curvature in changes in slope, etc.).

The equipment of the invention does not have these limitations when used on large areas of land, so the welding machine (3) has a large sized wedge (16) (greater than 20 cm in effective length), so that speeds of preferably 20 meters per minute can be obtained, according to the study carried out.

In the preferred embodiment of the invention, the welding machine (3) comprises a mobile platform (17) equipped with wheels with independent traction and steering motors (18), which will move over the already welded membranes, and a welding head or unit (19), preferably a tilting welding head or unit, to undertake changes in slope.

Said welding head or unit (19) preferably comprises the following elements:
- A welding set comprising elements used in hot wedge machines, including motorized pressure rollers (21) for consolidating the weld and preferably guide rollers (20), with the peculiarity of the enlarged size of the wedge (16) to achieve the highest desired speed.
- Preferably a cleaning system for cleaning the membranes or geomembranes (2, 2') at the weld band to prevent soiling from affecting the quality of the weld seams, which in a preferred implementation comprises rotating rollers (22) arranged in the front part of the welding head (19).
- Preferably a series of sensors for monitoring the parameters of the welding process, including temperature sensors (23) for detecting the temperature of the membranes or geomembranes (2, 2') to be welded, roller pressure, ambient temperature and humidity, etc. The information from the sensors is used for on-line adjustment of the process parameters and for remote monitoring of the process.
- Preferably sensors (24) for measuring the position of the edges of the membranes to be joined, in order to obtain the overlapping measurement of the membranes, prior to welding, and to adjust the paths of the welding machine (3) and deployment machine (1) online to achieve the precise standardized overlapping (typically between 10 cm and 15 cm). Preferably, contactless sensors, e.g. infrared or ultrasonic transmission matrix forks, are used.
- Preferably an automated mechanism (25) for the lateral removal of the wedge (16), so that the latter is in contact with the membranes only while it is welding correctly according to the preset welding parameters. The mechanism for removal will also act when a blockage in the forward movement of the machine is detected and even when the power supply fails, in order to avoid damage due to overheating of the membranes (2, 2'). In a preferred form of implementation, it comprises a solenoid-activated electromagnet or anchor bolt.

As for the mobile platform (17) of the welding machine which carries the welding unit (19) in the front part thereof, it comprises, in addition to the driving elements (18):
- A module (26) with the controllers of the various components of the machine (heating control for the wedge, control of traction and steering motors coordinated with the rotation speed of the consolidation rollers, etc.), as well as, preferably, a positioning system by geolocation similar to the one implemented in the deployment machine.
- Preferably a communications module (27) for communication with components outside the welding machine, preferably with the deployment machine (1) to send data about the welding process, so that, with the positioning system and communications module (12) of the deploying machine (1), there is a detailed remote recording of data, the analysis of which can detect possible irregularities in the welding process with their precise location in the installation. This communications module is also used to coordinate the movement of the two machines, reporting the relative distance between them and, where appropriate, the path corrections to be made by the deployment machine to achieve the optimal overlapping of the membranes.
- Preferably operator interface elements (not depicted in the figure), preferably comprising an informative display or HMI for visualization of installation parameters (thickness of geomembranes, temperatures, roller pressure, speed, etc.) and the possible readjustment thereof with respect to those automatically pre-calculated.
- Preferably a radio control to direct the different operating modes of the machine: remote-controlled driving, positioning maneuver to start welding, and autonomous movement mode welding.

Finally, the planning and control computer unit comprised in the equipment of the invention allows for optimal, realistic and adaptive planning (28) of the installation, and, moreover, is integrated in a comprehensive computer platform for which, preferably, it contemplates, first of all, the use of drone-based topography technologies (aerial photogrammetry) to be able to obtain a 3D survey of the installation after the terrain preparation works.

Said planner takes the model generated by the photogrammetry application as a reference, and it is adjusted to the features of deployments in large installations, giving top priority to the use of entire rolls, thus minimizing the number of welds transverse to the forward movement direction of the deployment. However, the computer planning program or software implemented in the computer unit allows the marking of areas to be optimized by "weld length", mainly the base of the installation, or by "area" or utilization of the material, which provides better results for slopes, in such a way that the final result is the best balance of both optimization criteria.

On the other hand, the computer unit also includes a specific computer program remotely connected to the deployment machine (1) so that, by making use of the positioning system of the communication module (12) thereof, all the information necessary to monitor the progress of the installation online is available in real time, readjusting the initially planned planning where appropriate, and obtaining a detailed record of the process parameters over the entire course of same, which allows an evaluation of the quality of the installation.

Finally, the existence of a computer platform for the integral management of installations of geomembrane in the field, which not only covers the planning, monitoring and supervision of the installations, but also interacts with the production and logistics process in order to optimize the overall process and increase its performance, is contemplated.

## Claims

1. An autonomous deployment machine (1) for the deployment of geomembrane or membrane rolls (2, 2'), **characterized in that** it comprises at least:
- One mobile platform (4) with a body (13) and self-guiding means,
- One support and unwinding system (6) for a geomembrane or membrane roll (2, 2') installed on the platform (4),
- One autonomous electrical power generation system installed in the body (13) of the mobile platform (4), which produces electrical power for the displacement and operation of systems and modules of said deployment machine (1), and
- One communication module (12).

2. The machine according to claim 1, **characterized in that** the platform (4) comprises on its side at least one vision system (9) for detecting the edge of a previously deployed membrane or geomembrane (2') and directing the path of the deployment machine (1) to align, with a preset overlapping, a membrane or geomembrane (2) being deployed by the machine (1) on the previously deployed membrane (2').

3. The machine according to any of the preceding claims, **characterized in that** the support and unwinding system (6) for the geomembrane or membrane roll (2) comprises an edge detection sensor (8) for detecting the edge of the membrane (2) being deployed, which allows the path of the deployment machine (1) to be corrected so that the overlapping of the membranes (2 and 2') is not affected by "telescopic" deformations or lateral displacements of the rolling.

4. The machine according to any of the preceding claims, **characterized in that** the support and unwinding system (6) comprises a system of motorized rollers (7), as a means of unwinding control, which regulate the rotation speed of the roll (2) during the deployment depending on the speed of the welding machine (3), modulating the same with the measurement of the tension (10) of the membrane being deployed.

5. The machine according to any of the preceding claims, **characterized in that** it comprises a series of interconnected electronic controllers, installed in the body (13) of the platform (14) and connected to the communication module (12) to govern the operation of the machine, being able to implement different degrees of movement autonomy in the machine (1).

6. The machine according to any of the preceding claims, **characterized in that** the communication module (12) comprises a positioning system based on GPS and local beaconing for navigation and remote tracking by means of an external computer unit for planning and monitoring the progress of the installation.

7. A welding machine (3) for welding geomembranes or membranes (2, 2'), **characterized in that** it comprises:
- A mobile platform (17) with self-guiding means and with wheels (18),
- A welding head or unit (19) using a hot wedge (20) for welding two membranes or geomembranes (2, 2'), a first previously deployed membrane (2') and a second membrane (2),
- Motorized consolidation rollers (21) to consolidate the weld between the two membranes or geomembranes (2, 2'),
- Independent traction and steering motors for each wheel (18), and
- A control module (26) with at least controllers for heating the wedge (16) and controllers for the traction and steering motors, and
- A communications module (27).

8. The machine (3) according to claim 7, **characterized in that** it comprises at least one sensor for measuring the temperature of the membranes or geomembranes (2, 2') to be welded, at least one sensor for measuring the pressure of the consolidation rollers (21) and at least one sensor for measuring the welding speed, as well as at least one electronic controller for dynamically adapting the welding temperature and the welding speed based on preset value ranges depending on at least the welding temperature, the welding pressure and the thickness of the membranes or geomembranes (2 and 2') to be welded.

9. The machine (3) according to any of claims 7 to 8, **characterized in that** it comprises a cleaning system (22) for cleaning the membranes or geomembranes (2, 2') at the weld band, mainly of the previously deployed membrane or geomembrane (2').

10. The machine (3) according to any of claims 7 to 9, **characterized in that** the welding head or unit (19) comprises edge sensors (24) for detecting the edge of the membranes or geomembranes (2, 2') to direct the movement of the machine (3).

11. The machine (3) according to any of claims 7 to 10, **characterized in that** it comprises an automated removal mechanism (25) for removing the hot wedge (16).

12. The machine (3) according to any of claims 7 to 11, **characterized in that** it comprises a positioning system based on GPS and local beaconing for navigation and remote tracking by means of an external computer unit for planning and monitoring the welding progress.

13. Equipment for the automated installation of membranes or geomembranes (2, 2'), **characterized in that** it comprises:
- an automatic deployment machine (1) for the deployment of geomembrane or membrane rolls (2, 2') on a surface, according to any of claims 1 to 6,
- a welding machine (3) for welding the membranes or geomembranes (2, 2') previously deployed by the deployment machine (1), located behind said deployment machine (1) and connected and synchronized with it to coordinate the movement of both machines with each other to weld two contiguous geomembranes (2, 2'), a geomembrane (2) being deployed by the deployment machine (1) and overlapping a geomembrane (2') previously deployed on the surface, and
- an external computer unit for planning the installation of the geomembranes on the surface, and for monitoring, in real time, the operation of the deployment machine (1) and the welding machine (3).

14. The equipment according to claim 13, **characterized in that** it comprises a welding machine (3) according to any of claims 7 to 12.

15. A method for the automated installation of geomembranes or a membrane (2, 2'), **characterized in that** it comprises at least the following steps:
- A step for parameterization and mapping of the terrain,
- A step for planning the deployment and welding of geomembrane or membrane rolls (2, 2'),
- A step for deployment of a first membrane or geomembrane (2'),
- A step for deployment and welding of a second membrane or geomembrane (2) on the first membrane or geomembrane (2') using equipment for the automated installation of membranes or geomembranes according to any of claims 13 to 14, with control by said equipment for the automated installation of the positioning of the second membrane (2) on the first membrane (2') during the deployment of said second membrane (2) and control of the positioning by geolocation of the equipment during the deployment, and
- Remote monitoring during the deployment and welding of membranes or geomembranes (2, 2') from data sent by the equipment to an external computer unit.
